(19) Europäisches Patentamt
European Patent Office
Office européen des brevets

(11) **EP 3 611 141 A1**

(12) **EUROPÄISCHE PATENTANMELDUNG**

(43) Veröffentlichungstag:
**19.02.2020   Patentblatt 2020/08**

(21) Anmeldenummer: **19197216.5**

(22) Anmeldetag: **16.09.2009**

(51) Int Cl.:
**C03C 10/00** (2006.01)  **C03C 3/087** (2006.01)
**C03C 3/095** (2006.01)  **C03C 3/097** (2006.01)
**C03C 8/02** (2006.01)  **C03C 8/04** (2006.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.10.2008   DE 102008050263**

(62) Dokumentnummer(n) der früheren Anmeldung(en) nach Art. 76 EPÜ:
**09778544.8 / 2 349 942**

(71) Anmelder: **SCHOTT AG**
**55122 Mainz (DE)**

(72) Erfinder:
• **SIEBERS, Dr. Friedrich**
**55283 Nierstein (DE)**

• **SCHIFFNER, Dr. Ulrich**
**55126 Mainz (DE)**
• **SCHMIDBAUER, Dr. Wolfgang**
**55126 Mainz (DE)**
• **SCHÖNBERGER, Klaus**
**55127 Mainz (DE)**

(74) Vertreter: **Blumbach · Zinngrebe Patentanwälte PartG mbB**
**Alexandrastraße 5**
**65187 Wiesbaden (DE)**

Bemerkungen:
Diese Anmeldung ist am 13.09.2019 als Teilanmeldung zu der unter INID-Code 62 erwähnten Anmeldung eingereicht worden.

(54) **TRANSPARENTE, EINGEFÄRBTE KOCHFLÄCHE MIT VERBESSERTER FARBIGER ANZEIGEFÄHIGKEIT UND VERFAHREN ZUR HERSTELLUNG EINER SOLCHEN KOCHFLÄCHE**

(57)    Transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik keines der chemischen Läutermittel Arsenoxid und Antimonoxid enthält, mit Transmissionswerten von größer als 0,1 % im Bereich des sichtbaren Lichtes im gesamten Wellenlängenbereich größer als 450 nm, einer Lichttransmission im Sichtbaren von 0,8 - 2,5 % und einer Transmission im Infraroten bei 1600 nm von 45 - 85 %.

EP 3 611 141 A1

**Beschreibung**

Die Erfindung bezieht sich auf eine transparente, eingefärbte Kochfläche mit verbesserter farbiger Anzeigefähigkeit bestehend aus einer Glaskeramik mit Hochquarz-Mischkristallen als vorherrschender Kristallphase sowie auf ein Verfahren zu deren Herstellung.

Kochfelder mit einer Glaskeramikplatte als Kochfläche sind gängiger Stand der Technik. Solche Glaskeramikplatten liegen üblicherweise als ebene Platten vor oder sind dreidimensional verformt. Glaskeramiken mit Hochquarz-Mischkristallen als vorherrschender Kristallphase werden aus kristallisierbaren Lithiumaluminiumsilikat-Gläsern hergestellt.

Die Herstellung dieser Glaskeramiken erfolgt in mehreren Stufen.

Bei der großtechnischen Herstellung von Glaskeramik wird zunächst das kristallisierbare Ausgangsglas aus einem Gemisch aus Scherben und pulverförmigen Gemengerohstoffen bei Temperaturen üblicherweise zwischen 1500 und 1650°C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze. Auch wenn diese Stoffe fest im Glasgerüst eingebunden sind, so sind sie doch unter Sicherheits- und Umweltschutzaspekten nachteilig. So müssen bei der Rohstoffgewinnung, -aufbereitung und wegen der Verdampfung bei der Schmelze besondere Vorsichtsmaßnahmen ergriffen werden.

Neuerdings wird insbesondere der Einsatz von $SnO_2$ als unbedenkliches Läutermittel beschrieben. Um gute Blasenqualitäten zu erreichen, werden bei konventionellen Schmelztemperaturen (maximal ca. 1680°C) neben $SnO_2$ bevorzugt Halogenid-Verbindungen als zusätzliche Läutermittel eingesetzt. So wird in den japanischen Anmeldungen JP 11 100 229 A und JP 11 100 230 A der Einsatz von 0,1 - 2 Gew.-% $SnO_2$ und 0 -1 Gew.-% Cl beschrieben. Nach diesen Schriften wird die Einfärbung durch Zusatz von $V_2O_5$ als alleiniges Färbemittel erreicht.

Der Zusatz von 0,05 - 1 Gew.-% Fluor (US 2007 0004578 A1) und 0,01 - 1 Gew.-% Brom (US 2008 0026927 A1) zur Unterstützung der Läuterung mit $SnO_2$ wird ebenfalls offenbart. Auch in diesen Schriften sind Läutertemperaturen unterhalb 1700°C beschrieben. Das Hauptfärbemittel ist $V_2O_5$. Nachteilig ist der Zusatz der Halogenide, da sie bei der Schmelztemperatur stark verdampfen und dabei toxische Verbindungen, wie z.B. HF bilden.

Der Einsatz von $SnO_2$ in Verbindung mit Hochtemperaturläuterung oberhalb 1700°C zur Erreichung guter Blasenqualitäten wird in der DE 199 39 787 C2 beschrieben. Diese Schrift liefert aber keinen Hinweis auf das Erreichen einer guten Anzeigefähigkeit im Wellenlängenbereich ab 450 nm.

Nach dem Einschmelzen und Läutern erfährt das Glas üblicherweise eine Heißformgebung durch Walzen oder neuerdings Floaten, um Platten herzustellen. Für eine wirtschaftliche Herstellung ist zum einen eine niedrige Schmelztemperatur und eine niedrige Verarbeitungstemperatur $V_A$ gewünscht, zum anderen darf das Glas bei der Formgebung keine Entglasung zeigen. Das heißt, es dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und günstigerweise unter der Verarbeitungstemperatur liegt, um die Bildung störender Kristalle zu vermeiden.

Anschließend wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 800°C Keime, üblicherweise aus $ZrO_2/TiO_2$-Mischkristallen, erzeugt werden. Auch $SnO_2$ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten, wie sie für eine wirtschaftliche, schnelle Keramisierung gewünscht sind, werden bei Temperaturen von 850 bis 950°C erreicht. Bei dieser maximalen Herstelltemperatur wird das Gefüge der Glaskeramik homogenisiert und die optischen, physikalischen und chemischen Eigenschaften der Glaskeramik eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einen Bereich von ca. 950 bis 1200°C. Mit dem Übergang von Hochquarz- zu Keatit-Mischkristallen erhöht sich der thermische Ausdehnungskoeffizient der Glaskeramik und die Transparenz verringert sich durch die mit der Vergrößerung der Kristalle einhergehende Lichtstreuung. In der Regel sind Glaskeramiken mit Keatit-Mischkristallen als Hauptphase daher transluzent oder opak und die damit verbundenen Lichtstreuung wirkt sich negativ auf die Anzeigefähigkeit aus.

Eine Schlüsseleigenschaft dieser Glaskeramiken mit Hochquarz-Mischkristallen als Hauptkristallphase ist die Herstellbarkeit von Werkstoffen, die über einen äußert niedrigen Wärmeausdehnungskoeffizienten im Bereich von Raumtemperatur bis 700°C und darüber von < 0,5 $\times$ $10^{-6}$/K verfügen. Aufgrund der niedrigen thermischen Ausdehnung besitzen diese Glaskeramiken eine ausgezeichnete Temperaturunterschiedsfestigkeit und Temperaturwechselbeständigkeit.

Bei der Anwendung als Kochfläche hat die technische Entwicklung aufgrund der Erfordernisse aus dem praktischen Einsatz zu sehr spezifischen, teilweise gegenläufigen Anforderungen an die Transmission geführt.

Um die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer Lichttransmission begrenzt. Andererseits sollen während des Betriebes, auch bei niedriger Leistung die strahlenden Heizkörper gut erkennbar sein. Auch für die Anzeigefähigkeit ist eine gewisse Lichttransmission erforderlich, da die üblichen roten Leuchtdioden unterhalb der Kochplatte eingebaut werden. Um diesen Anforderungen zu genügen, sind Glaskeramik-Kochflächen üblicherweise auf Werte der Lichttransmission von 0,5 bis 2,5 % eingestellt. Dies wird durch Zusätze von färbenden Elementen erreicht. Glaskeramik-Kochflächen erscheinen dann unabhängig vom verwendeten Farbelement aufgrund der niedrigen Lichttransmission in Aufsicht schwarz, in Durchsicht je nach verwendeten farbgebenden Elementen meist rot, rotviolett oder braunorange.

Farbige Anzeigen bestehen aus Licht emittierenden elektronischen Bauteilen, meist Leuchtdioden, die unterhalb der Kochfläche eingebaut werden. Sie sind für den Bedienungskomfort und den sicheren Betrieb gewünscht. So werden beispielsweise die aktuelle Heizleistung oder Restwärme der verschiedenen Kochzonen optisch angezeigt. Die Anzeige der Restwärme ist für die sichere Handhabung wichtig, wenn die Heizkörper nicht strahlen oder wenn, wie bei induktiv beheizten Kochflächen generell nicht zu erkennen ist, dass die Kochfläche heiß ist. Die üblichen roten Leuchtdioden strahlen bei Wellenlängen um 630 nm. Um den Bedienungskomfort und die technischen Funktionen zu verbessern, aber auch um den Hausgeräteherstellern über das Design eine Möglichkeit zur Differenzierung zu eröffnen, sind neben den üblichen roten auch andersfarbige Anzeigen gewünscht.

Im Infraroten ist eine Transmission der Kochfläche von 45 - 85 % gewünscht.

Eine hohe Transmission im Infraroten ist vorteilhaft, weil die Strahlung direkt auf den Topfboden trifft, dort absorbiert wird und damit ein schnelleres Ankochen erreicht wird. Bei zu hoher Transmission kann sich die Umgebung der Kochfläche bei Fehlbedienung, z. B. bei frei strahlender Kochzone durch einen verschobenen Topf zu stark erwärmen.

Ein früherer Typ von Glaskeramik-Kochflächen, bekannt unter dem Namen Ceran Color®, hergestellt von der SCHOTT AG, besaß gute farbliche Anzeigefähigkeit. Ceran Color® ist durch Zusätze von NiO, CoO, $Fe_2O_3$ und MnO gefärbt und durch $Sb_2O_3$ geläutert. Durch diese Kombination von Farboxiden wird eine Lichttransmission von typischerweise 1,2 % für Kochflächen mit üblicher Dicke von 4 mm eingestellt. Die Transmission im Bereich von 380 nm bis 500 nm beträgt je nach Wellenlänge 0,1 - 2,8 %. Bei einer für rote Leuchtdioden üblichen Wellenlänge von 630 nm beträgt die Transmission ca. 6 %. Nachteilig bei diesem früheren Typ von Glaskeramik-Kochflächen ist, dass die verwendeten Farboxide auch sehr stark im Infraroten absorbieren. Die IR-Transmission bei 1600 nm beträgt weniger als 20 %. Damit ist die Ankochgeschwindigkeit herabgesetzt. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceamic Technology", Wolfram Höland und George Beall, The American Ceramic Society 2002 in Tabelle 2 - 7 aufgeführt.

In neueren, weiter entwickelten Glaskeramik-Kochflächen wird meist $V_2O_5$ zur Einfärbung verwendet, weil es die besondere Eigenschaft besitzt, im Bereich des sichtbaren Lichtes zu absorbieren und im Bereich der Infrarotstrahlung eine hohe Transmission zu erlauben.

Die Einfärbung durch $V_2O_5$ stellt sich als ein recht komplexer Prozess dar. Wie in früheren Untersuchungen (DE 19939787 C2) gezeigt wurde, ist für die Überführung des Vanadiumoxids in den färbenden Zustand ein Redoxvorgang Voraussetzung. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel. Gezeigt wurde das durch Mössbauer-Untersuchungen an Sb- und Sn-geläuterten Zusammensetzungen. Beim Keramisieren wird ein Teil des $Sb^{3+}$ bzw. $Sn^{2+}$ im Ausgangsglas in die höhere Oxidationsstufe $Sb^{s+}$ bzw. $Sn^{4+}$ überführt. Es ist anzunehmen, dass das Vanadium in reduzierter Oxidationsstufe als $V^{4+}$ oder $V^{3+}$ in den Keimkristall eingebaut wird und dort durch Elektronen-Chargetransfer-Reaktionen intensiv färbt. Als weiterer Redoxpartner kann auch $TiO_2$ die Einfärbung durch Vanadiumoxid verstärken. Neben der Art und Menge der Redoxpartner im Ausgangsglas hat auch der Redoxzustand der im Glas bei der Schmelze eingestellt wird einen Einfluss. Ein niedriger Sauerstoff-Partialdruck $pO_2$ (reduzierend eingestellte Schmelze) z.B. durch hohe Schmelztemperaturen verstärkt die Farbwirkung des Vanadiumoxids.

Einen weiteren Einfluss auf die Farbwirkung des Vanadiumoxid haben die Keramisierungsbedingungen. Insbesondere führen hohe Keramisierungstemperaturen und längere Keramisierungszeiten zu einer stärkeren Einfärbung.

Die beschriebenen Zusammenhänge bei der Einfärbung durch $V_2O_5$ wird der Fachmann nutzen, um durch eine bestimmte Glaszusammensetzung, bestimmte Redox-Einstellungen des $pO_2$ bei der Schmelze und die Keramisierungsbedingungen den gewünschten Transmissionsverlauf einzustellen. Bisher war es aber nicht möglich, alle Anforderungen wie spezifikationsgerechte Lichttransmission, hohe IR-Transmission, sowie Anzeigefähigkeit für standardmäßige rote Leuchtdioden zusammen mit der gewünschten verbesserten Anzeigefähigkeit für andersfarbige Leuchtanzeigen zu erreichen. Die Form der Absorptionsbande des Vanadinoxids und damit die Transmission im Bereich des sichtbaren Lichtes im gesamten Wellenlängenbereich größer als 450 nm bis zur oberen Grenze von 750 nm konnte nicht zu höheren Transmissionen angepasst werden.

Beispiele für solche $V_2O_5$-gefärbten Glaskeramik-Kochflächentypen sind das $Sb_2O_3$-geläuterte Ceran Hight-rans® und das SnO2-geläuterte Ceran Suprema®, die von der Firma SCHOTT AG hergestellt werden. Die Transmissionskurven dieser beiden Glaskeramiken sind veröffentlicht in dem Buch "Low Thermal Expansion Glass Ceramics", Second Edition, Editor Hans Bach, Dieter Krause, Springer-Verlag Berlin Heidelberg 2005, auf Seite 63 (ISBN 3-540-24111-6).

Der Transmissionswert von 0,1 % wird bei den genannten Glaskeramik-Kochflächen und bei anderen im Markt befindlichen Glaskeramik-Kochflächen in dem für die Sichtbarkeit farbiger, insbesonderer blauer und grüner Anzeigen wichtigen Wellenlängen von ca. 450 - 550 nm unterschritten. Andere wesentliche Anforderungen an die Transmission werden von diesen Glaskeramik-Kochflächen erfüllt: hohe Infrarot-Transmission für hohe Ankochgeschwindigkeiten, spezifikationsgerechte Transmission für standardmäßige rote Leuchtdioden bei ca. 630 nm und eine Lichttransmission um 1,5 %.

Um diesen Nachteil zu beheben offenbart die europäische Patentanmeldung EP 1465460 A2 eine Glaskeramik-Kochfläche, die im CIE-Farbsystem gemessen, mit Normlicht C einen Y-Wert (brightness) von 2,5 - 15 besitzt, bei einer Dicke von 3 mm. Die Bezeichnungen "brightness" und Lichttransmission entsprechen dergleichen Messgröße. Der Y-Wert ist identisch mit dem Wert der Lichttransmission, gemessen nach DIN 5033. Mit dieser Lichttransmission werden verbesserte Anzeigen für blaue und grüne Leuchtdioden erreicht. Die offenbarten Zusammensetzungen sind mit $As_2O_3$ und/oder $Sb_2O_3$, teilweise in Kombination mit $SnO_2$ geläutert. Die Einfärbung wird durch $V_2O_5$ vorgenommen. In dem Vergleichsbeispiel wird aufgezeigt, dass bei einer Lichttransmission von 1,9 % die Anzeigefähigkeit für blaue und grüne Leuchtdioden mit den aufgeführten Materialzusammensetzungen unzureichend ist. Die beanspruchten hohen Werte der Lichttransmission von mindestens 2,5 % und bevorzugt höher sind jedoch nachteilig, hinsichtlich der Abdeckung der elektronischen Bauteile unterhalb der Kochfläche. Außerdem wird das ästhetische schwarze Erscheinungsbild der Kochfläche in Aufsicht beeinträchtigt.

Es ist Aufgabe der Erfindung, transparente, eingefärbte Kochflächen mit verbesserter farbiger Anzeigefähigkeit, sowie ein Verfahren zu ihrer Herstellung bereitzustellen, wobei die Kochflächen aus einer Glaskeramik mit Hochquarz-Mischkristallen als vorherrschender Kristallphase bestehen, bis auf unvermeidliche Spuren keines der chemischen Läutermittel Arsenoxid und Antimonoxid enthalten und sich für eine wirtschaftliche und umweltfreundliche Herstellung eignen. Ferner sollen die Ausgangsgläser für eine wirtschaftliche Herstellung gut schmelzbar und läuterbar sein, über eine hohe Entglasungsstabilität verfügen und in kurzen Zeiten keramisierbar sein. Die erfindungsgemäßen Kochflächen sollen allen weiteren Anforderungen genügen, die an Kochflächen gestellt werden wie z.B.: chemische Beständigkeit, Temperaturbelastbarkeit und hohe Temperatur/Zeitbelastbarkeit hinsichtlich Änderungen ihrer Eigenschaften (wie z.B. thermische Ausdehnung, Transmission, Aufbau von Spannungen).

Diese Aufgaben werden durch eine Kochfläche gemäß Anspruch 1 und durch ein Verfahren gemäß Anspruch 12 gelöst.

Die eingefärbten Kochflächen verfügen über Transmissionswerte von größer als 0,1 % im Bereich des sichtbaren Lichtes im gesamten Wellenlängenbereich von größer als 450 nm, eine Lichttransmission im Sichtbaren von 0,8 - 2,5 % und eine Transmission im Infraroten bei 1600 nm von 45 - 85 %.

Durch die erfindungsgemäße Lichttransmission von 0,8 - 2,5 % ist sichergestellt, dass die störende Durchsicht auf die technischen Bauelemente unter der Glaskeramik-Kochfläche verhindert wird und das ästhetische schwarze Erscheinungsbild in Aufsicht gewährleistet ist. Strahlende Heizkörper sind im Betrieb sichtbar und übliche rote Leuchtdioden-Anzeigen gut erkennbar. Durch die Transmission von größer als 0,1 % im Bereich des sichtbaren Lichtes im gesamten Wellenlängenbereich größer als 450 nm sind auch andersfarbige Anzeigen gut erkennbar. Angesichts der Leuchtkraft handelsüblicher blauer, grüner, gelber oder oranger Leuchtdioden ist dieser Transmissionswert ausreichend und stellt eine deutliche Verbesserung gegenüber dem Stand der Technik dar. Insbesondere die Anzeige mit blauen und grünen Farben ist deutlich verbessert. Anzeigen mit weißem Licht werden durch den Transmissionsverlauf im gesamten Wellenlängenbereich größer als 450 nm farblich weniger verfälscht. Unterhalb von 350 nm, im Bereich des Ultravioletten, werden die niedrigen Transmissionswerte von deutlich weniger als 0,01 % der bekannten Glaskeramik-Kochflächen auch mit der erfindungsgemäßen Kochfläche sichergestellt. Die Blockierung des UV-Lichtes ist vorteilhaft zum Schutz organischer Komponenten, wie z.B. Kleber in den technischen Einbauten unter der Kochfläche, sowie als Schutz beim Kochen, falls blaue Leuchtdioden mit Ultraviolett-Strahlungsanteil zur Anzeige eingesetzt werden.

Durch die eingestellte Infrarot-Transmission von 45 - 85 %, gemessen bei 1600 nm, werden die Forderungen an hohe Ankochgeschwindigkeit und Schutz vor unzulässiger Erwärmung der Umgebung der Kochfläche erreicht. Da die erfindungsgemäßen Werte der Transmission und Lichttransmission für die Funktion der Kochfläche maßgeblich sind, gelten sie unabhängig von der Dicke der Kochfläche, die üblicherweise zwischen 2,5 und 6 mm beträgt. Kleinere Dicken sind nachteilig hinsichtlich der Festigkeit und größere Dicken sind unwirtschaftlich, weil sie mehr Material erfordern und die Keramisierungsgeschwindigkeit herabsetzen. Meist liegt die Dicke der Kochfläche bei etwa 4 mm. Die angegeben Transmissionswerte für kommerzielle Kochflächen und in den Ausführungsbeispielen beziehen sich daher, wenn nicht anders ausgeführt auf diese Dicke. Wenn die Kochfläche über Formgebung mit Walzen hergestellt wird, ist die Unterseite meist mit Noppen versehen, um sie vor festigkeitserniedrigenden Verletzungen bei der Herstellung zu schützen. Oft wird die Kochflächen-Unterseite im Bereich der farbigen Anzeigen mit transparentem organischen Polymer geglättet, um eine optische Verzerrung durch die Noppen zu vermeiden. Bei Kochflächen mit glatter Unterseite ohne Noppen sind farbigen Anzeigen unverzerrt und heller wahrnehmbar.

Um die Forderungen an die Temperaturbelastbarkeit sicherzustellen verfügen die erfindungsgemäßen Kochflächen über niedrige Wärmeausdehnungskoeffizienten von weniger als $1 \cdot 10^{-6}$/K, bevorzugt von $(0 \pm 0,3) \cdot 10^{-6}$/K.

Die erfindungsgemäßen transparenten, eingefärbten Kochflächen zeichnen sich also durch eine Zusammensetzung ohne Verwendung von Arsen- und/oder Antimonoxid als Läutermittel aus und sind damit technisch frei von diesen unter Sicherheits- und Umweltschutzaspekten nachteiligen Komponenten. Als Verunreinigung liegen diese Komponenten üblicherweise in Gehalten von weniger als 500 ppm vor.

Das erfindungsgemäße Verfahren zur Herstellung einer transparenten, eingefärbten Kochfläche mit verbesserter farbiger Anzeigefähigkeit zeichnet sich dadurch aus, dass es eine Glaskeramik mit Hochquarz-Mischkristall als vorherrschender Kristallphase ausbildet und dass bis auf unvermeidliche Spuren, auf die chemischen Läutermittel Arsenund/oder Antimonoxid verzichtet wird und die Kochfläche auf Transmissionswerte von größer als 0,1 % im Bereich des sichtbaren Lichtes im gesamten Wellenlängenbereich größer als 450 nm, eine Lichttransmission im Sichtbaren von 0,8 bis 2,5 % und eine Transmission im Infraroten bei 1600 nm von 45 bis 85 % eingestellt wird.

Um die Blasenqualität zu verbessern können neben dem eingesetzten $SnO_2$ zusätzlich weitere Läuterzusätze wie z.B. $CeO_2$, Sulfatverbindungen, Halogenidverbindungen eingesetzt werden. Deren Gehalte sind üblicherweise auf Mengen bis 1 Gew.-% begrenzt. Bei der Herstellung von Kochflächen sind als gute Blasenqualitäten solche mit Blasenzahlen von unter 10, bevorzugt unter 5 Blasen/kg Glas (bezogen auf Blasengrößen größer als 0,1 mm) gewünscht.

Bevorzugt ist die Transmission der Kochfläche auf Werte von

> 0,15 % bei 450 nm

> 0,15 % bei 500 nm

> 0,25 % bei 550 nm

3 - 9 % bei 630 nm

50 - 80 % bei 1600 nm

und eine Lichttransmission im Sichtbaren von 1,0 - 2,0 % eingestellt.

Bei diesen Werten ist die farbliche Anzeigefähigkeit weiter verbessert und die unterschiedlichen Forderungen an den Transmissionsverlauf werden weiter optimiert. Eine weiter verbesserte Abdeckung der technischen Einbauten unterhalb der Kochflächen-Glaskeramik und eine besonders ästhetisches schwarzes Aussehen in Auflicht wird erreicht, wenn die Lichttransmission weniger als 1,7 % beträgt. Transmissionswerte der Kochfläche bei 630 nm von 3 bis 9 % entsprechen den Toleranzwerten handelsüblicher Kochflächen. Es ist vorteilhaft diese Werte einzustellen, damit das Erscheinungsbild der gebräuchlichen roten LED-Anzeigen auch bei der erfindungsgemäßen Kochfläche unverändert ist.

Weiter verbessert sich die Anzeigefähigkeit, wenn in bevorzugter Ausführung die Transmission der Kochfläche auf Werte von

> 0,10 % bei 400 nm

> 0,15 % bei 450 nm

> 0,25 % bei 500 nm

> 0,30 % bei 550 nm

3 - 9 % bei 630 nm

50 - 80 % bei 1600 nm und eine Lichttransmission im Sichtbaren von 1,0 - 1,7 % eingestellt wird.

Die erfindungsgemäße Kochfläche besitzt bevorzugt eine Zusammensetzung der Glaskeramik, die in Gew.-% auf Oxidbasis im wesentlichen besteht aus:

| | |
|---|---|
| $Li_2O$ | 3,0 - 4,2 |
| $\Sigma$ $Na_2O+K_2O$ | 0,2 - 1,5 |
| MgO | 0 - 1,5 |
| $\Sigma$ $CaO+SrO+BaO$ | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - < 0,6 |
| $\Sigma$ $TiO_2+ZrO_2+SnO_2$ | 3,8 - 6 |
| $V_2O_5$ | 0,01 - 0,06 |
| $Fe_2O_3$ | 0,03 - 0,2, |

mit der Bedingung:

1 < $Fe_2O_3$ / $V_2O_5$ < 8.

Der Begriff "im wesentlichen besteht aus" bedeutet, dass die aufgeführten Komponenten wenigstens 96 % in der Regel 98 % der Gesamtzusammensetzung betragen sollen. Eine Vielzahl von Elementen wie z.B. F, Cl, die Alkalien Rb, Cs oder Elemente wie Hf sind bei den großtechnisch verwendeten Gemengerohstoffen übliche Verunreinigungen. Andere Verbindungen wie z.B. solche der Elemente Ge, seltene Erden, Bi, W, Nb, Ta, Y können in geringen Anteilen zugesetzt werden.

Neben dem Farboxid $V_2O_5$ in Gehalten von 0,01 bis 0,06 Gew.-% können auch weitere färbende Komponenten wie z.B. Chrom-, Mangan-, Kobalt-, Nickel-, Kupfer-, Selen-, Selten Erd-, Molybdänverbindungen eingesetzt werden, um die Färbung zu unterstützten. Ihr Gehalt ist auf Mengen von maximal etwa 1 Gew.-% begrenzt, weil diese Verbindungen in der Regel die Transmission im Infrarot absenken. Außerdem können diese größtenteils polyvalenten Verbindungen die Einfärbung des $V_2O_5$ über Redox-Reaktionen stören und die Einstellung der erfindungsgemäße Transmission erschweren.

Durch Zusatz von 50 - 400 ppm $Nd_2O_3$ ist es möglich, die Glaskeramik-Kochfläche zu markieren. Die Absorptionsbande des Nd im nahen Infrarot bei 806 nm liegt in einem Bereich hoher Transmissionswerte der Glaskeramik und ist so markant im Transmissionsspektrum. Dadurch kann das

Kochflächenmaterial sicher dem Hersteller zugeordnet werden und mit optischen Scherbenerkennungsverfahren ist ein gutes Recycling möglich.

Der Wassergehalt der Ausgangsgläser zur Herstellung der erfindungsgemäßen Kochflächen liegt abhängig von der Wahl der Gemengerohstoffe und der Prozessbedingungen bei der Schmelze üblicherweise zwischen 0,015 und 0,06 mol/l. Dies entspricht β-OH-Werten von 0,16 bis 0,64 $mm^{-1}$ für die Ausgangsgläser.

Die Oxide $Li_2O$, $Al_2O_3$ und $SiO_2$ in den bevorzugten, angegebenen Grenzen sind notwendige Bestandteile der Hochquarz-Mischkristalle. Ein Mindestgehalt an $Li_2O$ von 3 Gew.-% ist erforderlich, doch führen $Li_2O$-Gehalte von über 4,2 Gew.-% in einem Herstellprozess häufig zu einer ungewollten Entglasung. Ein Gehalt von 3,2 bis 4,0 Gew.-% führt zu besonders guten Ergebnissen.

Zu Vermeidung hoher Viskositäten des Ausgangsglases und zur Unterdrückung der Neigung einer unerwünschten Entglasung von Mullit bei der Formgebung ist der $Al_2O_3$-Gehalt auf bevorzugt maximal 23 Gew.-%, insbesondere 22 Gew.-% begrenzt. Der $SiO_2$-Gehalt soll maximal 69 Gew.-% betragen, weil diese Komponente die Viskosität des Glases stark erhöht. Bevorzugt wird diese Komponente weiter auf Werte von maximal 68 und weiter maximal 67 Gew.-% begrenzt. Für gutes Einschmelzen der Gläser und für niedrige Formgebungstemperaturen sind höhere Gehalte von $SiO_2$ unwirtschaftlich. Der Mindestgehalt an $SiO_2$ soll 60 Gew.-%, insbesondere 62 Gew.-% betragen, weil dies für die geforderten Kochflächeneigenschaften, wie z.B. chemische Beständigkeit und Temperaturbelastbarkeit vorteilhaft ist.

Als weitere Komponenten können MgO, ZnO und $P_2O_5$ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 2,0 Gew.-%, bevorzugt höchstens 1,8 Gew.-% begrenzt. Der MgO-Gehalt ist auf maximal 1,5 Gew.-%, bevorzugt bis zu 1,2 Gew.-% begrenzt, weil er sonst den Ausdehnungskoeffizienten der Glaskeramik unzulässig erhöht. Ein MgO-Mindestgehalt von 0,1 Gew.-% wird in der Regel benötigt, damit die thermische Ausdehnung der Glaskeramik nicht auf negative Werte fällt.

Die Zugabe der Alkalien $Na_2O$, $K_2O$ und der Erdalkalien CaO, SrO, BaO sowie von $B_2O_3$ verbessern die Schmelzbarkeit und die Entglasungsstabilität bei der Formgebung des Glases. Die Gehalte müssen jedoch begrenzt werden, weil diese Komponenten nicht in die Kristallphasen eingebaut werden, sondern im wesentlichen in der Restglasphase der Glaskeramik verbleiben. Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Die Summe der Alkalien $Na_2O$ + $K_2O$ soll mindestens 0,2, bevorzugt mindestens 0,4 Gew.-% betragen und maximal 1,5 Gew.-%, bevorzugt maximal 1,2 Gew.-%.

Die Summe der Erdalkalien CaO + SrO + BaO soll maximal 4 Gew.-%, bevorzugt mindestens 0,2 Gew.-% betragen.

Die genannten Alkalien und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die Zugabe an $P_2O_5$ kann bis zu 3 Gew.-% betragen und ist bevorzugt auf 1,5 % begrenzt. Die Zugabe von $P_2O_5$ ist günstig für die Entglasungsfestigkeit. Höhere Gehalte wirken sich ungünstig auf die Säurebeständigkeit aus.

$TiO_2$, $ZrO_2$ und $SnO_2$ sind als Keimbildner erforderlich. Bei der Keramisierung bilden sie während der Keimbildung Keime in hoher Dichte, die für das Aufwachsen der Hochquarz-Mischkristalle bei der Kristallisation als Unterlage dienen. Höhere Gehalte als in der Summe 6 Gew.-% verschlechtern die Entglasungsstabilität. Dies gilt besonders für die Komponente $SnO_2$, die auf Werte von weniger als 0,6 Gew.-% begrenzt ist. Höhere Gehalte führen zur Kristallisation von Sn-haltigen Kristallphasen an den Kontaktmaterialien (z.B. Pt/Rh) bei der Formgebung und sind unbedingt zu vermeiden. Der $ZrO_2$-Gehalt ist auf 2 Gew.-%, bevorzugt 1,8 Gew.-% und weiter bevorzugt auf maximal 1,6 Gew.-% begrenzt, da höhere Gehalte das Einschmelzverhalten des Gemenges bei der Glasherstellung verschlechtern und die Entglasungsstabilität bei der Formgebung durch Bildung von $ZrO_2$- haltigen Kristallen beeinträchtigt werden kann. Der Mindestgehalt an $ZrO_2$ soll 0,5 Gew.-% und bevorzugt 0,8 Gew.-% betragen, um eine hohe Keramisierungsgeschwindigkeit zu begünstigen. Der $TiO_2$-Gehalt liegt zwischen 2,5 und 4,0 Gew.-%, bevorzugt mindestens 2,8 Gew.-%. Die Mindestmenge soll nicht unterschritten werden, damit eine schnelle Keimbildung für das Erzielen hoher Keramisierungsgeschwindigkeiten sichergestellt ist. Der Gehalt soll 4 Gew.-% nicht übersteigen, weil sonst die Entglasungsstabilität verschlechtert wird.

Überraschend wurde nun gefunden, dass $Fe_2O_3$-Gehalte ab 600 ppm, bevorzugt ab 700 ppm in Kombination mit eng spezifizierten Gehalten von $TiO_2$, $V_2O_5$ und $SnO_2$ den Transmissionsverlauf beeinflussen können. Da sich $Fe_2O_3$, speziell der Anteil an zweiwertigen $Fe^{2+}$ negativ auf die IR-Transmission auswirkt, soll der $Fe_2O_3$-Gehalt maximal 0,2 und bevorzugt maximal 0,18 Gew.-% betragen. Besonders bevorzugt ist ein $Fe_2O_3$-Gehalt von 0,08 - 0,15 Gew.-%. Die Kombination der Farboxide $Fe_2O_3$ mit $V_2O_5$ und seinem Redox-Partner $SnO_2$ gestattet es, mit geringeren Mengen des kostspieligen und als Gefahrstoff eingestuften Färbemittels $V_2O_5$ auszukommen. Dabei werden die Anforderungen an die Transmission bei niedrigen Wellenlängen ab 450 nm und die anderen Forderungen wie spezifikationsgerechte Lichttransmission, Infrarot-Transmission, sowie die Transmission bei 630 nm eingehalten. Die Transmissionskurve wird gegenüber den bekannten mit Vanadiumoxid gefärbten Glaskeramiken im Bereich des sichtbaren Lichtes flacher. Um den Gehalt des teueren und als Gefahrstoff nicht unbedenklichen Färbemittels $V_2O_5$ zu reduzieren ist es unverzichtbar, dass der $Fe_2O_3$-Gehalt mindestens so hoch sein muss wie der $V_2O_5$-Gehalt und damit der Bedingung genügen muss

$$1 < Fe_2O_3 / V_2O_5 < 8.$$

Das Farboxid $Fe_2O_3$ ist also mengenmäßig das Hauptfärbemittel und bevorzugt ist der Gehalt doppelt so hoch wie der des $V_2O_5$. Dadurch ist es auch möglich, kostengünstigere Gemengerohstoffe einzusetzen. Weitere Komponenten, die dazu beitragen den benötigten $V_2O_5$ -Gehalt zu verringern sind $SnO_2$ und $TiO_2$. Für die erfindungsgemäße Einstellung der Transmission ist es daher erforderlich $V_2O_5$, $SnO_2$, $TiO_2$ und $Fe_2O_3$ in bestimmten engen Grenzen einzustellen. Insbesondere der $TiO_2$-Gehalt muss eine bestimmte Mindestmenge überschreiten.

Mit den erfindungsgemäßen $Fe_2O_3$-, $TiO_2$-, $V_2O_5$- und $SnO_2$-Gehalten ist es möglich, alle Anforderungen an den Transmissionsverlauf, wie spezifikationsgerechte Lichttransmission, hohe Infrarot-Transmission, sowie Anzeigefähigkeit für standardmäßige rote Leuchtdioden zusammen mit der gewünschten verbesserten Anzeigefähigkeit für andersfarbige Leuchtanzeigen zu erreichen.

Als weiteres wichtiges Ergebnis der Zugabe von $Fe_2O_3$ wurde gefunden, dass dies die Läuterung wesentlich unterstützt. In Kombination mit dem $SnO_2$ als Hauptläutermittel gibt auch das $Fe_2O_3$ Sauerstoff ab und wird dabei zum $Fe^{2+}$ reduziert. Der für die Läuterwirkung maßgebliche Umsatz steigt mit der Temperatur der Schmelze an. Eine Temperaturbehandlung der Schmelze von größer als 1700°C und weiter größer als 1750 °C liefert also hinsichtlich der Blasenqualität weiter verbesserte Ergebnisse. Damit sich die Zugabe von $Fe_2O_3$ als zusätzliches Läutermittel in Kombination mit $SnO_2$ besonders vorteilhaft auswirkt, sollte der Gehalt mindestens 20 % des $SnO_2$-Gehaltes betragen.

Für eine wirtschaftliche Herstellung ist eine schnelle Keramisierbarkeit des Ausgangsglases gewünscht. Dabei ist es notwendig, die Keimbildungs- und Keramisierungsgeschwindigkeit durch eine entsprechend gewählte Zusammensetzung zu erhöhen. Hierbei hat es sich als vorteilhaft erwiesen, die Gehalte der Keimbildner $TiO_2$ + $ZrO_2$ + $SnO_2$ zu erhöhen, um die Keimbildungsgeschwindigkeit anzuheben, während der Gehalt an $P_2O_5$ zu niedrigeren Werten gewählt werden muss. Weiterhin sind beim Keramisieren auftretende Verzerrungen der Kochflächen ein begrenzender Faktor. Großtechnische Keramisierungsöfen haben eine gewisse Temperaturinhomogenität und daher ist es schwierig, die Temperatur an Ober- und Unterseite des kristallisierbaren Glases während der Kristallisation völlig gleichmäßig einzustellen. Geringe Temperaturunterschiede von wenigen °C führen zu früherer Kristallisation auf der Plattenseite mit der höheren Temperatur. Verbunden mit dem linearen Kristallisationsschrumpf von ca. 1 % kommt es dann zu den Verzerrungen. Handelsübliche Kochflächen sind üblicherweise auf eine Verzerrung von weniger als 0,1 % ihrer diagonalen Abmessung spezifiziert.

Um diese Verzerrung bei einem schnellen Keramisierungsprogramm zu minimieren, hat es sich als günstig erwiesen, den Anteil der Kristallphase bildenden Komponenten wie $Li_2O$, $SiO_2$ zu minimieren und den Anteil der Komponenten, die die Restglasphase der Glaskeramik bilden, wie die Alkalien $Na_2O$ und $K_2O$ sowie die Erdalkalien CaO, SrO, BaO zu erhöhen. Der Anteil der Hochquarz-Mischkristallphase beträgt vorteilhafterweise weniger als 70 Gew.-% und liegt bei 60 bis 70 Gew.-%. Bei der Keramisierung befindet sich die Glaskeramikplatte auf einer ebenen Unterlagsplatte. Durch den erhöhten Anteil der Restglasphase und die Verringerung des Kristallphasenanteils werden entstandene Verzerrungen durch viskoses Fließen bei den hohen Temperaturen verringert, indem sich die Glaskeramikplatte auf der ebenen Unterlage anlegt.

Bevorzugt besitzt die erfindungsgemäße Kochfläche bezüglich schneller Keramisierbarkeit des Ausgangsglases eine Zusammensetzung der Glaskeramik, die in Gew.-% auf Oxidbasis im wesentlich besteht aus:

| | |
|---|---|
| $Li_2O$ | 3,2 - 4,2 |
| $Na_2O$ | 0,1 - 1 |
| $K_2O$ | 0,1 - 1 |
| $\sum Na_2O + K_2O$ | 0,2 - 1,5 |
| $MgO$ | 0 - 1,5 |
| $\sum CaO + SrO + BaO$ | 0,1 - 4 |
| $ZnO$ | 0 - 2 |
| $B_2O_3$ | 0 - 1 |
| $Al_2O_3$ | 19 - 23 |
| $SiO_2$ | 60 - 68 |
| $TiO_2$ | 2,8 - 4 |
| $ZrO_2$ | 0,8 - 1,8 |
| $P_2O_5$ | 0 - 1,5 |
| $SnO_2$ | 0,1 - < 0,6 |
| $\sum TiO_2 + ZrO_2 + SnO_2$ | 4,4 - 6 |
| $V_2O_5$ | 0,01 - 0,05 |
| $Fe_2O_3$ | 0,07 - 0,18, |

mit der Bedingung:

$2 < Fe_2O_3 / V_2O_5 < 6$.

Unter einer schnellen Keramisierbarkeit wird eine thermische Behandlung zur Kristallisation der Glaskeramik mit einer Dauer von weniger als 2 Stunden, bevorzugt weniger als 80 Minuten verstanden.

Bei dem erfindungsgemäßen Verfahren zur Keramisierung wird das thermisch entspannte kristallisierbare Ausgangsglas innerhalb von 3 - 30 min auf den Temperaturbereich von etwa 680°C erhitzt. Die erforderlichen hohen Heizraten können großtechnisch in Rollenöfen realisiert werden. Dieser Temperaturbereich von etwa 680°C entspricht in etwa der Transformationstemperatur des Glases. Oberhalb dieser Temperatur bis etwa 800°C ist der Bereich mit hohen Keimbildungsraten. Der Temperaturbereich der Keimbildung wird über einen Zeitraum von 10 bis 30 Minuten durchfahren. Danach wird die Temperatur des Kristallisationskeime enthaltenden Glases innerhalb von 5 bis 30 Minuten auf eine Temperatur von 850 bis 950°C, die sich durch hohe Kristallwachstumsgeschwindigkeiten der Hochquarz-Mischkristallphase auszeichnet, erhöht. Diese maximale Temperatur wird bis zu 20 Minuten gehalten. Dabei wird das Gefüge der Glaskeramik homogenisiert und die optischen, physikalischen und chemischen Eigenschaften eingestellt. Die erhaltene Glaskeramik wird bis 800°C mit Abkühlraten von ca 10°C/min und danach rasch auf Raumtemperatur abgekühlt.

Gemengerohstoffe, wie z.B. Bariumnitrat oder Bariumchlorid, die als Quelle für das BaO eingesetzt werden, sind unter Umweltaspekten nachteilig und erfordern besondere Vorsichtsmaßnahmen beim Einsatz. Außerdem erhöht BaO die Dichte der Glaskeramik und damit das Gewicht der Kochfläche. Um den BaO-Gehalt zu verringern oder bis auf Verunreinigungen ganz zu entfernen, hat es sich als günstig erwiesen, BaO durch die chemisch verwandten Erdalkalien CaO und SrO zu substituieren. Dabei sollen die Gehalte an CaO 0,2 bis 1 Gew.-% und an SrO 0,1 bis 1 Gew.-% betragen.

Für eine wirtschaftlich Herstellung soll das kristallisierbare Ausgangsglas gut schmelzbar sein und über eine hohe Entglasungsfestigkeit verfügen. Die Verarbeitungstemperatur soll dabei kleiner als 1320°C und bevorzugt kleiner als 1310 °C sein. Die obere Entglasungsgrenze soll mindestens 30°C, bevorzugt mindestens 50°C unter der Verarbeitungstemperatur liegen. Hinsichtlich der Entglasung kritische Kristallphasen sind Mullit (Aluminiumsilikat), Baddeleyt ($ZrO_2$) sowie $Li_2O$-$Al_2O_3$-$SiO_2$-Mischkristalle und $SnO_2$-enthaltende Kristallphasen. Hinsichtlich der Entglasungsfestigkeit sind demnach höhere Gehalte an $Li_2O$, $Al_2O_3$, $SiO_2$, $ZrO_2$ und $SnO_2$ nachteilig. Um die Viskosität der Glasschmelze abzusenken hat es sich als notwendig erwiesen, den Gehalt an $SiO_2$, $Al_2O_3$, $ZrO_2$ zu verringern, während die Gehalte an Alkalien $Na_2O + K_2O$, Erdalkalien $CaO + SrO + BaO$ bei höheren Werten gewählt werden.

Bevorzugt besitzt diesbezügliche eine erfindungsgemäße Kochfläche folgende Zusammensetzung in Gew.-% auf Oxidbasis:

| | |
|---|---|
| $Li_2O$ | 3,2 - 4,0 |

(fortgesetzt)

| | |
|---|---|
| $Na_2O$ | 0,2 - 1 |
| $K_2O$ | 0,1 - 1 |
| $\Sigma$ $Na_2O+K_2O$ | 0,4 - 1,2 |
| $MgO$ | 0,1 - 1,2 |
| $CaO$ | 0,2 - 1 |
| $SrO$ | 0 - 1 |
| $BaO$ | 0 - 3 |
| $\Sigma$ $CaO+SrO+BaO$ | 0,2 - 4 |
| $ZnO$ | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |
| $ZrO_2$ | 0,5 - 1,6 |
| $P_2O_5$ | 0 - 1,5 |
| $SnO_2$ | 0,1 - 0,5 |
| $\Sigma$ $TiO_2+ZrO_2+SnO_2$ | 4,2 - 6 |
| $V_2O_5$ | 0,01 - 0,05 |
| $Fe_2O_3$ | 0,08 - 0,15, |

mit der Bedingung:

$2 < Fe_2O_3 / V_2O_5 < 6$.

Es hat sich gezeigt, dass gezielt reduziert eingestellte Bedingungen des kristallisierbaren Ausgangsglases, die bei der Schmelze vorgenommen werden, eine günstige Wirkung auf den gewünschten Transmissionsverlauf der Glaskeramik haben. Die genannten unterschiedlichen Anforderungen an die Transmission können dann noch besser miteinander vereinbart werden. Der Gleichgewichts-Sauerstoffpartialdruck $pO_2$ von 1 bar soll dabei bei einer Temperatur von >1580°C, bevorzugt von >1640°C erreicht werden. Je höher diese Temperatur ist, desto reduzierender ist das erhaltene Glas eingestellt und die Anteile der niedrigen Wertigkeiten bei den polyvalenten Komponenten wie z. B. $Sn^{2+}$, $Fe^{2+}$, $Ti^{3+}$ sind erhöht. Dies verstärkt die Farbwirkung des Vanadiumoxids.

Bei den erfindungsgemäßen Temperaturen für den Gleichgewichts-Sauerstoffpartialdruck $pO_2$ ist es möglich, mit geringen $V_2O_5$-Gehalten den erfindungsgemäßen Transmissionsverlauf einzustellen. Es werden weniger als 0,04 und bevorzugt weniger als 0,03 Gew.-% benötigt. Da Vanadin auch ein kostspieliger Rohstoff ist, ist es wirtschaftlich vorteilhaft, den Gehalt an $V_2O_5$ zu minimieren.

Dieser Gleichgewichts-Sauerstoffpartialdruck $pO_2$ kann bei der Schmelze durch Zusatz von Reduktionsmitteln in pulvriger und/oder flüssiger Form zum Ausgangsgemenge eingestellt werden. Dafür eignen sich Metalle, Kohlenstoff und/oder aufoxidierbare Kohlenstoff- bzw. Metallverbindungen wie z.B. Al- oder Si-Pulver, Zucker, Holzkohle, SiC, TiC, MgS, ZnS. Auch gasförmige Reduktionsmittel, wie z.B. Formiergas sind geeignet. Die genannten Reduktionsmittel sind geeignet den $pO_2$ der Schmelze zu senken und den gewünschten Wert für den Gleichgewichts-Sauerstoffpartialdruck einzustellen.

Eine bevorzugte Möglichkeit den Gleichgewichts-Sauerstoffpartialdruck $pO_2$ einzustellen ist die Temperaturbehandlung der Glasschmelze bei Temperaturen von größer als 1700°C, bevorzugt größer als 1750°C. Diese Temperaturbehandlung kann vorteilhafterweise als Hochtemperaturläuterung ausgeführt werden, die es gestattet, großtechnisch die gewünschten niedrigen Blasenzahlen von < 10, bevorzugt < 5 Blasen/kg zu erreichen. Die Läuterwirkung ist deshalb so ausgeprägt, weil das $SnO_2$ ein Läutermittel ist, das den zum Läutern erforderlichen Sauerstoff bei hohen Temperaturen oberhalb 1700°C verstärkt abgibt. Dies gilt auch für das zusätzliche Läutermittel $Fe_2O_3$. Die Kombination der beiden liefert also weiter verbesserte Blasenqualitäten, bzw. erlaubt höhere Glasdurchsätze in großtechnischen Schmelzwannen. Der Beitrag des $Fe_2O_3$ zur Läuterung wird signifikant bei Gehalten von mindestens 20 Gew.-% des eingesetzten Läutermittels $SnO_2$. Man kann somit den Vorteil einer guten Läuterwirkung mit dem erfindungsgemäßen Vorteil der Einstellung des Gleichgewichts-Sauerstoffpartialdrucks $pO_2$ auf den bevorzugten Wert verbinden. Der Mechanismus ist dabei der, dass bei den hohen Temperaturen $O_2$- Läuterblasen gebildet werden, die in der Glasschmelze aufsteigen und diese verlassen, wobei andere gelöste Fremdgase ebenfalls entfernt werden. Bei ausreichenden Zeiten, wenn sämtlicher bei der Läuterung freigesetzter Sauerstoff aus der Schmelze entfernt wird, entspricht die Temperatur bei der der Gleichgewichts-Sauerstoffpartialdrucks $pO_2$ den Wert 1 bar hat der maximalen Temperatur bei der Behandlung. Da dieses Gleichgewicht bei der großtechnischen Glasschmelze und den verwendeten Durchsätzen aus Zeitgründen nicht ganz erreicht wird, verbleibt immer eine gewisse Menge von Sauerstoff-Läuterblasen in der Schmelze und wird beim Abkühlen resorbiert. Des Weiteren wird in geringem Maße Sauerstoff aus der Umgebung beim Abkühlen der Schmelze von der Maximaltemperatur auf die Formgebungstemperatur VA wieder aufgenommen. Dadurch bedingt, entspricht die gemessene Temperatur des Gleichgewichts-Sauerstoffpartialdrucks $pO_2$ von 1 bar nicht der Maximaltemperatur bei der Schmelze, sondern liegt darunter. Es sei denn man setzt reduzierende Zusätze zu.

Vorzugsweise sind unter der erfindungsgemäßen Kochfläche mit verbesserter farbiger Anzeigefähigkeit anstelle oder in Ergänzung zu den üblichen roten Anzeigen eine oder mehrere andersfarbige Anzeigen, wie blaue, grüne, gelbe, orange oder weiße angeordnet. Die farbigen Anzeigen bestehen aus Licht emittierenden elektronische Bauteilen, meist aus Leuchtdioden. Die Unterseite der Kochfläche kann die üblichen Noppen besitzen oder glatt ausgeführt sein.

Die Beheizung der Kochfläche kann durch StrahlungsHeizkörper, Halogen-Heizkörper, Induktionsbeheizung oder mit Gas erfolgen. Es sind alle Formen von Anzeigen, punktuelle wie flächige möglich.

Die Kochfläche kann dabei nicht nur als ebene Platte ausgeformt sein, sondern auch dreidimensional verformte wie z.B. abgekantete, gewinkelte oder gewölbte Platten können verwendet werden. Die Platten können rechtwinklig oder in anderen Formen vorliegen, sowie neben ebenen Bereichen dreidimensional verformte Bereiche wie z.B. Woks enthalten.

Die vorliegende Erfindung wird mit Hilfe der folgenden Beispiele weiter verdeutlicht.

Für einige Ausführungsbeispiele sind in Tabelle 1 Zusammensetzungen und Eigenschaften der kristallisierbaren Ausgangsgläser aufgeführt. Dabei handelt es sich bei den Gläsern 1 bis 12 um erfindungsgemäße Gläser und bei dem Glas 13 um ein Vergleichsglas außerhalb der vorliegenden Erfindung, dessen Zusammensetzung der kommerziellen Kochflächen-Glaskeramik Ceran Suprema® der SCHOTT AG entspricht. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt sind F, Cl, B, P, Rb, Cs, Hf, die üblicherweise weniger als 0,05 Gew.-% betragen. Sie werden oft über die Rohstoffe für die chemisch verwandten Komponenten eingeschleppt, so z.B. Rb und Cs über die Na-, bzw. K- Rohstoffe, oder Sr über den Ba-Rohstoff und umgekehrt.

Der Wassergehalt der Gläser beträgt 0,03 - 0,05 mol/l, entsprechend βOH-Werten von 0,32 bis 0,53 $mm^{-1}$.

In Tabelle 1 sind auch die Eigenschaften im glasigen Zustand, wie z. B. Transformationstemperatur Tg, Verarbeitungstemperatur $V_A$, Entglasungstemperatur, sowie die Dichte aufgeführt. Bei Gläsern gleicher Zusammensetzung, bei denen die Läutertemperatur variiert wurde, sind diese Eigenschaften gleich.

Zur Messung der Entglasungstemperatur werden die Gläser in Pt/Rh10-Tiegeln aufgeschmolzen. Anschließend werden die Tiegel für 5 Stunden bei verschiedenen Temperaturen im Bereich der Verarbeitungstemperatur $V_A$ gehalten. Die oberste Temperatur bei der die ersten Kristalle an der Kontaktfläche der Glasschmelze zur Tiegelwand auftreten bestimmt die Entglasungstemperatur.

Weiter sind in Tabelle 1 die Maximaltemperatur der Schmelze und die zugehörige Zeit, sowie die gemessene Temperatur aufgeführt bei der der $pO_2$ den Wert 1 bar erreicht. Die $pO_2$-Messung wurde in bekannter Weise an den wieder aufgeschmolzenen Gläsern als Funktion der Temperatur durchgeführt und die Temperatur für den Gleichgewichts-Sauerstoffpartialdruck $pO_2$ = 1 bar bestimmt. Bei $pO_2$-Messungen ist der $pO_2$ eine Funktion der Temperatur und hängt reversibel von dieser ab, solange kein Sauerstoff mit der Umgebung ausgetauscht wird.

Fig. 1 zeigt die Messung des $pO_2(T)$ für das Glas Nr. 9 und die Bestimmung der charakteristischen Temperatur T ($pO_2$ = 1 bar). Da die Glasschmelze bei hohen Temperaturen nahe bei der Temperatur des Gleichgewichts-Sauerstoffpartialdrucks T ($pO_2$ =1 bar) bereits Sauerstoff an die Umgebung abgibt, führt dies dazu, dass der Wert dieser charakteristischen Temperatur verändert wird. Bei der Messung wurde deshalb die Temperatur des Glases bis auf ca. 40°C unter der charakteristischen Temperatur T ($pO_2$ = 1 bar) erhöht und der Wert durch Extrapolation der gemessenen Gerade log $pO_2$ proportional zu 1/T bestimmt (siehe Fig.1).

Die Ausgangsgläser von Tabelle 1 wurden aus in der Glasindustrie üblichen Rohstoffen bei Temperaturen von ca. 1620°C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden verschiedene Temperaturbehandlungen zur Läuterung vorgenommen. Die maximalen Schmelz- bzw. Läutertemperaturen und -zeiten finden sich in Tabelle 1.

Die Gläser Nr 2, 3, 5, 6, 8, 10, 11, 13 wurden für 2 Stunden bei 1640°C geläutert. Anschließend wurden Stücke von ca. 140x100x30 $mm^3$ Größe gegossen

Die Gläser 1, 4, 7, 9, 12 und das Vergleichsglas wurden einer Hochtemperaturläuterung mit den in Tabelle 1 angegebenen Temperaturen und Zeiten unterzogen um gute Blasenqualitäten zu erreichen und um reduzierendere Bedingungen entsprechend der angegebenen Temperatur T ($pO_2$ = 1 bar) einzustellen. Vor Ausgießen der geläuterten Glasschmelze wurde die Temperatur auf etwa 1700°C abgesenkt. Die Gussstücke wurde zur Vermeidung von Spannungen in einem Kühlofen, beginnend bei einer Temperatur von etwa 20°C unter der Transformationstemperatur der Gläser, auf Raumtemperatur abgekühlt. Aus den Gussstücken wurden die Prüfmuster für die Messungen präpariert.

Der positive Einfluss der Hochtemperaturläuterung hinsichtlich der Blasenqualität zeigt sich auch bei den Laborschmelzen. Die absoluten Werte der Blasenzahlen in den Laborschmelzen liegen technisch bedingt (anderes Oberflächen- zu Volumenverhältnis bei Laborschmelzen) um Größenordnungen über denen einer großtechnischen Schmelze. Aussagefähig sind die relativen Unterschiede. Die konventionell um 1640°C geläuterten Schmelzen haben ca. 1000 bis 5000 Blasen/kg Glas, bei Hochtemperaturläuterung ca. 200 bis 2000 Blasen/kg. Bei gleicher Zusammensetzung liefert die Hochtemperaturläuterung die besseren Werte. Großtechnisch werden bei diesen Werten die gewünschten Qualitäten von weniger als 10 Blasen/kg Glas erreicht.

Bei den Gläsern 1, 2, 3 sowie 7, 8 und 9, 10 handelt es sich um gleiche Zusammensetzungen, die unterschiedlich geschmolzen wurden. Glas 1 wurde einer Hochtemperturläuterung unterzogen. Glas 3 wurde durch Zusatz von 1 Gew.-% Zucker zum Gemenge gegenüber dem bei gleichen Temperaturen geläuterten Glas Nr. 2 reduzierender eingestellt. Demzufolge unterscheiden sich auch die Temperaturen für den Gleichgewichts-Sauerstoffpartialdruck. Aufgrund der damit verknüpften unterschiedlichen, reduzierenden Bedingungen der kristallisierbaren Ausgangsgläser unterscheiden sich bei gleichen Keramisierungsbedingungen die Transmissionswerte der erhaltenen Glaskeramiken. Bei niedrigen Maximaltemperaturen der Schmelze benötigt man höhere Anteile an $V_2O_5$ oder höhere Keramisierungstemperaturen um die Transmissionswerte anzugleichen.

Die Gläser 1, 4 und das Vergleichsglas 12, sowie Scherben der kommerziell produzierte Glaskeramik Ceran Color® wurden nach der Läuterung und Abstehen bei 1600°C, 50 h in einem 14 1 fassenden Pt/Rh10- Tiegel mit einer Laborwalzanlage zu kochflächentypischen Platten ausgeformt. Die Laborwalze besteht aus verkürzten Original-Fertigungswalzen. Die Unterwalze ist für die Herstellung einer gebräuchlichen genoppten Kochflächenunterseite strukturiert. Aus dem erhaltenen Glasband von ca. 200 mm Breite, 4 mm Dicke und 2 m Länge werden nach einer Kühlung zum Abbau von Spannungen die Prüfmuster für die Messungen und Platten der Abmessung 18 cm x 18 cm x 4 mm für die Untersuchungen zur Ebenheit bei schneller Keramisierung präpariert. Die Platten wurden in einem Laborofen mit homogener, steuerbarer Ober- und Unterhitze auf einer ebenen keramischen Unterlagsplatte keramisiert. Es wurde mit 10°C/min auf 750°C, Haltezeit 15 min aufgeheizt. Dann wurde mit 4°C/min auf 900°C, Haltezeit 15 min weiter erhitzt und schnell auf Raumtemperatur abgekühlt. Während des gesamten Programms war die obere Temperatur im Ofen gegenüber der Unterseite um 6°C erhöht. Dadurch wurden die Glaskeramikplatten gezielt domartig verformt. Die Abweichung von der Ebenheit für das Vergleichsglas Nr. 13 betrug 2,1 ± 0,2 mm (6 Versuche), bei Ceran Color® 0,6 ± 0,1 mm (4 Versuche) und bei Glas Nr. 1 und Nr. 4 für beide 0,5 ± 0,1 mm (3 Versuche). Da für das großtechnisch produzierte Glaskeramikmaterial Ceran Color® gezeigt ist, dass es sich in weniger als 80 min mit der geforderten Ebenheit keramisieren lässt, ist dies durch den relativen experimentellen Vergleich auch für die erfindungsgemäßen Gläser gezeigt.

Die Tabelle 2 zeigt die Keramisierungsbedingungen und Eigenschaften der erhaltenen Glaskeramiken und der Vergleichskeramiken 2, 4,17, außerhalb der Erfindung. Die Keramisierungen der Ausgangsgläser erfolgte mit den folgenden Temperatur/Zeit-Programmen, die Werte für $T_{max}$ und $t_{max}$ sind in der Tabelle 2 angegeben:

Keramisierungsprogramm 1:

    a) Aufheizen innerhalb von 15 Minuten von Raumtemperatur auf 680°C;
    b) Temperaturerhöhung von 680 auf 800°C innerhalb von 34,5 min, dabei Aufheizen mit 10°C/min auf 750°C, Haltezeit von 15 min bei 750°C, Aufheizen mit 4°C/min auf 800 °C;
    c) Temperaturerhöhung von 800°C auf $T_{max}$ und Haltezeit $t_{max}$ mit Heizrate 4°C/min;
    d) Abkühlen auf 800°C mit 10°C/min, dann schnelle Abkühlung auf Raumtemperatur.

Keramisierungsprogramm 2:

    a) Aufheizen innerhalb von 5 Minuten von Raumtemperatur auf 680°C;
    b) Temperaturerhöhung von 680 auf 800°C innerhalb von 19 min, dabei Aufheizen mit 10°C/min auf 730°C, weiteres Aufheizen mit 5°C/min auf 800 °C;
    c) Temperaturerhöhung von 800°C auf $T_{max}$ und Haltezeit $t_{max}$ mit Heizrate5°C/min;
    d) Abkühlen auf 800°C mit 10°C/min, dann schnelle Abkühlung auf Raumtemperatur.

Bei den Vergleichsglaskeramiken, Beispiel 2 und 4 führen die eingestellten pO$_2$- Werte im Ausgangsglas zu nicht erfindungsgemäßer Lichttransmission. Dies zeigt im Vergleich zu Beispiel 1 den Einfluss des eingestellten Redoxzustandes, da die Beispiele mit gleichen Keramisierungsbedingungen hergestellt wurden.

Dies kann durch Anpassung der Keramisierungsbedingungen korrigiert werden (Beispiel 3 und 5). Die Ausgangsgläser Nr. 1, 2 und 3 der Beispiele 1 bis 5 besitzen gleiche Zusammensetzung und unterscheiden sich nur in dem bei der Schmelze eingestellten Redoxzustand.

Die Werte für die mittlere Kristallitgröße und den Anteil der Hochquarz-Mischkristallphase wurden mittels Röntgenbeugung bestimmt. Die Beispiele verfügen aufgrund ihres Gehaltes an Hochquarz-Mischkristall als vorherrschender Kristallphase über die gewünschten sehr niedrigen Werte der thermischen Ausdehnung, gemessen im Temperaturbereich zwischen Raumtemperatur und 700°C. Die für die Erfindung charakteristischen Werte für die Transmission bei den verschiedenen Wellenlängen, sowie für die Lichttransmission, gleichbedeutend mit "brightness" Y, sind in der Tabelle aufgeführt. Die Werte wurden an polierten Platten mit der für Kochflächen typischen Dicke von 4 mm bestimmt. Die optischen Messungen erfolgten mit Normlicht C, 2 Grad.

Bei einem zusätzlichen Beispiel Nr. 18 wurde eine Zusammensetzung gemäß Glas Nr. 1 großtechnisch erschmolzen und durch Hochtemperaturläuterung bei ca. 1770°C, 15 min wurde eine Temperatur für den Gleichgewichts-Sauerstoffpartialdruck $pO_2$ = 1 bar von 1610°C eingestellt. Die Blasenqualität dieses Glases war hervorragend und betrug < 3 Blasen/kg Glas. Es wurde bei der Formgebung ein genopptes Glasband von 4 mm Dicke hergestellt und zur Vermeidung von Spannung in einem Kühlofen abgekühlt. Aus diesem Glasband wurden Kochflächen der Größe 500 x 500 x 4 mm geschnitten und in einem großtechnischen Rollenofen keramisiert. Das Keramisierungsprogramm entsprach Programm 2 (Tabelle 2) und die kristallisierbaren Glasplatten befanden sich auf einer keramischen ebenen Unterlagsplatte. Die erhaltenen Glaskeramiken verfügten über eine sehr gute Ebenheit von < 0,1 % in ihren Diagonalabmessungen. Die Transmissionskurve dieser erfindungsgemäßen Glaskeramik ist in Fig. 2, der Vergleichsglaskeramik von Beispiel 17 und dem erfindungsgemäßen Beispiel 19 gegenübergestellt. In dem für die Erfindung wesentlichen Wellenlängenbereich im sichtbaren Licht von 400 bis 600 nm zeigt sich der für die höhere Anzeigefähigkeit vorteilhafte Transmissionsverlauf der erfindungsgemäßen Glaskeramik bei Werten oberhalb 0,1 % und die gute UV-Blockung unterhalb 350nm.

Fig. 1: Messung des $pO_2$ als Funktion der Temperatur und Bestimmung der Temperatur des Gleichgewichts-Sauerstoffpartialdrucks T ($pO_2$ = 1 bar) am Beispiel von Glas Nr. 9

Fig. 2: Transmissionsspektren der erfindungsgemäßen Glaskeramiken Beispiel 18 und 19 sowie der Vergleichsglaskeramik Beispiel 17

**Tabelle 1: Zusammensetzungen und Eigenschaften erfindungsgemäßer Ausgangsgläser und Vergleichsglas 13**

| Glas Nr. | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Zusammensetzungen in Gew% auf Oxidbasis | | | | Wie Glas Nr. 1 | Wie Glas Nr. 1 | | | | | Wie Glass Nr7 | | Wie Glas Nr 9 | | | |
| Al2O3 | | | 20,8 | | | 20,9 | 21,0 | 20,90 | 21.7 | | 19,1 | | 21,0 | 20,9 | 21,2 |
| BaO | | | 2,19 | | | 2,26 | 0,97 | 1,48 | 1,01 | | 0,77 | | - | 2,30 | - |
| CaO | | | 0,44 | | | 0,46 | 0,40 | 0,40 | 0,13 | | 0,05 | | 0,5 | 0,42 | - |
| K2O | | | 0,24 | | | 0,20 | 0,25 | 0,30 | 0,22 | | 0,13 | | 0,4 | 0,22 | 0,15 |
| Li2O | | | 3,61 | | | 3,64 | 3,52 | 3,48 | 3,73 | | 3,59 | | 3,7 | 3,71 | 3,8 |
| MgO | | | 0,34 | | | 0,31 | 0,31 | 0,40 | 0,72 | | 1.16 | | 0,4 | 0,37 | 1,0 |
| Na2O | | | 0,58 | | | 0,62 | 0,45 | 0.50 | 0,33 | | 0,14 | | 0,6 | 0,59 | 0,45 |
| P2O5 | | | - | | | - | - | - | - | | - | | 0,6 | - | - |
| SiO2 | | | 65,2 | | | 64,9 | 66,70 | 66,10 | 65,3 | | 68,6 | | 65,8 | 65,14 | 67,2 |
| SnO2 | | | 0,24 | | | 0,24 | 0,24 | 0,24 | 0,27 | | 0,27 | | 0,26 | 0,24 | 0,2 |
| SrO | | | 0,10 | | | - | - | - | - | | | | 0,5 | - | - |
| TiO2 | | | 3,11 | | | 3,27 | 3,23 | 3,26 | 3.20 | | 2,58 | | 3,1 | 3,1 | 2.5 |
| ZnO | | | 1,52 | | | 1.50 | 1.38 | 1,36 | 1.60 | | 1,51 | | 1,6 | 1,5 | 1,7 |
| ZrO2 | | | 1.38 | | | 1,37 | 1,26 | 1,31 | 1,48 | | 1,71 | | 1,35 | 1,34 | 1,7 |
| CoO | | | - | | | 0,039 | 0,069 | 0,065 | 0,039 | | 0,04 | | | | - |
| Fe$_2$O$_3$ | | | 0,12 | | | 0,12 | 0,15 | 0,15 | 0,12 | | 0,12 | | 0,09 | 0,085 | 0,03 |
| MnO2 | | | 0,020 | | | 0,028 | - | - | 0,028 | | 0,03 | | 0,02 | 0,025 | - |
| Nd2O3 | | | 0,015 | | | - | | | | | | | | | - |
| NiO | | | - | | | 0,013 | - | - | 0,012 | | 0,012 | | | | - |
| V2O5 | | | 0,024 | | | 0,024 | 0,037 | 0,042 | 0,025 | | 0,023 | | 0,027 | 0,026 | 0,06 |
| Zusatz Gemenge | Gew% | | | | **1 (Zucker)** | | | | | | | | | | |

EP 3 611 141 A1

(fortgesetzt)

| Eigenschaften | | | | | | | | | | | | | | |
|---|---|---|---|---|---|---|---|---|---|---|---|---|---|---|
| **Tg** | °C | 673 | | | 666 | 679 | 678 | 671 | | 680 | | 672 | 670 | 674 |
| $V_A$ | °C | 1306 | | | 1303 | 1327 | 1318 | 1296 | | 1332 | | 1318 | 1305 | 1310 |
| Dichte | g/cm$^3$ | 2,478 | | | 2,480 | 2,448 | 2,460 | 2,468 | | 2,443 | | 2,444 | 2,479 | 2,438 |
| Entglasungstemp | °C | 1255 | | | 1260 | 1265 | 1265 | 1290 | | 1310 | | 1235 | 1235 | 1280 |
| T (pO$_2$= 1bar) | °C | 1643 | 1582 | 1798 | 1654 | 1608 | 1617 | 1664 | 1548 | 1696 | 1595 | 1564 | 1600 | 1569 |
| Maximaltemp Schmelze, Zeit | °C h | 1850 1 | 1640 2 | 1640 2 | 1850 1 | 1640 2 | 1640 2 | 1850 1 | 1640 2 | 1850 1 | 1640 2 | 1640 2 | 1780 0,25 | 1640 2 |

Tabelle 2: Keramisierungsbedingungen und Eigenschaften erfindungsgemäßer Glaskeramiken und Vergleichsglaskeramiken, Beispiele 2, 4, 17

| Beispiel Nr | | 1 | 2 | 3 | 4 | 5 | 6 | 7 | 8 | 9 |
|---|---|---|---|---|---|---|---|---|---|---|
| Glas Nr. | | 1 | 2 | 2 | 3 | 3 | 4 | 4 | 5 | 6 |
| | | | | | | | | | | |
| Keram.Prog. | | 1 | 1 | 1 | 1 | 1 | 2 | 2 | 2 | 2 |
| $T_{max}$ | °C | 900 | 900 | 940 | 900 | 860 | 890 | 875 | 875 | 875 |
| $t_{max}$ | min | 15 | 15 | 15 | 15 | 15 | 10 | 10 | 10 | 10 |
| Eigenschaften keramisiert: | | | | | | | | | | |
| Dichte | g/cm³ | 2,547 | | 2,547 | | 2,541 | | 2,546 | 2,526 | 2,532 |
| Thermische Ausdehnung | | | | | | | | | | |
| $\alpha_{20/700}$ | $10^{-6}$/K | 0,23 | | 0,58 | | 0,35 | | 0,32 | 0,01 | 0,20 |
| Transmission Normlicht C, 2° | | | | | | | | | | |
| 400 nm | % | 0,04 | 0,09 | 0,02 | 0,01 | 0,02 | 0,05 | 0,06 | 0,13 | 0,11 |
| 450 nm | % | 0,16 | 0,57 | 0,27 | 0,03 | 0,10 | 0,20 | 0,25 | 0,35 | 0,31 |
| 500 nm | % | 0,31 | 1,15 | 0,61 | 0,05 | 0,17 | 0,17 | 0,22 | 0,13 | 0,13 |
| 550 nm | % | 0,78 | 2,60 | 1,40 | 0,15 | 0,48 | 0,33 | 0,43 | 0,22 | 0,24 |
| 630 nm | % | 4,81 | 10,8 | 6,65 | 1,57 | 3,85 | 4,42 | 5,32 | 5,19 | 5,34 |
| 700 nm | % | 16,7 | 27,2 | 19,8 | 8,78 | 15,9 | 18,8 | 21,2 | 24,4 | 24,5 |
| 1600 nm | % | 69,4 | 70,0 | 69,6 | 67,8 | 67,6 | 54,8 | 55,8 | 48,0 | 48,8 |
| Lichttransmission | % | 1,4 | 3,9 | 2,2 | 0,4 | 1,0 | 1,0 | 1,2 | 1,0 | 1,1 |
| Röntgenbeugung | | | | | | | | | | |
| HQz-Phasengehalt | % | 62 | | 50 | | 60 | | 61 | 65 | 63 |
| mittlere Kristallitgröße | nm | 48 | | - | | 38 | | 38 | 32 | 35 |

Tabelle 2 (Fortsetzung): Keramisierungsbedingungen und Eigenschaften erfindungsgemäßer Glaskeramiken und Vergleichsglaskeramiken, Beispiele 2, 4, 17

| Beispiel Nr | | 10 | 11 | 12 | 13 | 14 | 15 | 16 | 17 | 18 | 19 |
|---|---|---|---|---|---|---|---|---|---|---|---|
| Glas Nr. | | 7 | 8 | 8 | 9 | 10 | 11 | 11 | 13 | | 12 |
| | | | | | | | | | | | |
| Keram. Prog. | | 2 | 2 | 2 | 2 | 2 | 1 | 2 | 2 | 2 | 2 |
| $T_{max}$ | °C | 890 | 915 | 930 | 915 | 935 | 930 | 930 | 930 | 915 | 915 |
| $t_{max}$ | min | 10 | 10 | 10 | 5 | 10 | 15 | 15 | 15 | 3 | 3 |
| Eigenschaften keramisiert: | | | | | | | | | | | |
| Dichte | g/cm³ | 2,548 | | 2,554 | 2,540 | 2,544 | 2,522 | 2,525 | 2,527 | 2,546 | 2,543 |
| Thermische Ausdehnung | | | | | | | | | | | |
| $\alpha_{20/700}$ | $10^{-6}$/K | 0,11 | | 0,07 | 0,02 | -0,04 | 0,02 | 0,01 | -0,14 | 0,24 | 0,23 |
| Transmission Normlicht C, 2° | | | | | | | | | | | |
| 400 nm | % | 0,07 | 0,16 | 0,14 | 0,02 | 0,06 | 0,03 | 0,03 | 0,01 | 0,03 | 0,30 |
| 450 nm | % | 0,20 | 0,57 | 0,47 | 0,16 | 0,29 | 0,18 | 0,19 | 0,04 | 0,15 | 0,38 |
| 500 nm | % | 0,16 | 0,46 | 0,37 | 0,19 | 0,29 | 0,35 | 0,37 | 0,15 | 0,28 | 0,40 |
| 550 nm | % | 0,36 | 0,86 | 0,68 | 0,51 | 0,67 | 0,85 | 0,90 | 0,92 | 0,72 | 0,85 |
| 630 nm | % | 5,37 | 8,91 | 7,48 | 7,90 | 8,51 | 5,03 | 5,21 | 9,96 | 4,72 | 5,19 |
| 700 nm | % | 22,9 | 29,4 | 26,4 | 29,3 | 29,2 | 17,4 | 17,7 | 28,6 | 17,0 | 18,3 |
| 1600 nm | % | 55,2 | 54,6 | 54,8 | 54,6 | 54,4 | 72,4 | 72,5 | 82,2 | 71,5 | 76,7 |
| Lichttransmission | % | 1,2 | 2,2 | 1,8 | 1,7 | 2,0 | 1,5 | 1,6 | 2,5 | 1,4 | 1,6 |
| Röntgenbeugung | | | | | | | | | | | |
| HQz-Phasengehalt | % | 68 | | 70 | 75 | 72 | 64 | 64 | 73 | 62 | 63 |
| mittlere Kristallitgröße | nm | 38 | | 46 | 43 | 44 | 46 | 44 | 43 | 44 | 42 |

## Patentansprüche

1. Transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und Antimonoxid enthält, **gekennzeichnet durch** Transmissionswerte von größer als 0,1 % im Bereich des sichtbaren Lichtes im gesamten Wellenlängenbereich größer als 450 nm, eine Lichttransmission im Sichtbaren von 0,8 - 2,5 % und eine Transmission im Infraroten bei 1600 nm von 45 - 85 %.

2. Kochfläche nach Anspruch 1, **gekennzeichnet durch** Transmissionswerte von:

   > 0,15 % bei 450 nm
   > 0,15 % bei 500 nm
   > 0,25 % bei 550 nm
   3 - 9 % bei 630 nm
   50 - 80 % bei 1600 nm

   und eine Lichttransmission im Sichtbaren von 1,0 - 2,0 %.

3. Kochfläche nach wenigstens einem der vorhergehenden Ansprüche 1 und 2, **dadurch gekennzeichnet, dass** die Zusammensetzung der Glaskeramik (in Gew.-% auf Oxidbasis) im wesentlichen besteht aus

| | |
|---|---|
| $Li_2O$ | 3,0 - 4,2 |
| $\sum Na_2O+K_2O$ | 0,2 - 1,5 |
| MgO | 0 - 1,5 |
| $\sum CaO+SrO+BaO$ | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - < 0,6 |
| $\sum TiO_2+ZrO_2+SnO_2$ | 3,8 - 6 |
| $V_2O_5$ | 0,01 - 0,06 |
| $Fe_2O_3$ | 0,03 - 0,2 |

mit der Bedingung:
$1 < Fe_2O_3 / V_2O_5 < 8$.

**4.** Kochfläche nach wenigstens einem der vorhergehenden Ansprüche 1 bis 3, **gekennzeichnet durch** eine schnelle Keramisierbarkeit des Ausgangsglases und eine Zusammensetzung der Glaskeramik, die in Gew.-% auf Oxidbasis im wesentlichen besteht aus

| | |
|---|---|
| $Li_2O$ | 3,2 - 4,2 |
| $Na_2O$ | 0,1 - 1 |
| $K_2O$ | 0,1 - 1 |
| $\sum Na_2O+K_2O$ | 0,2 - 1,5 |
| MgO | 0 - 1,5 |
| $\sum CaO+SrO+BaO$ | 0,1 - 4 |
| ZnO | 0 - 2 |
| $B_2O_3$ | 0 - 1 |
| $Al_2O_3$ | 19 - 23 |
| $SiO_2$ | 60 - 68 |
| $TiO_2$ | 2,8 - 4 |
| $ZrO_2$ | 0,8 - 1,8 |
| $P_2O_5$ | 0 - 1,5 |
| $SnO_2$ | 0,1 - < 0,6 |
| $\sum TiO_2+ZrO_2+SnO_2$ | 4,4 - 6 |
| $V_2O_5$ | 0,01 - 0,05 |
| $Fe_2O_3$ | 0,07 - 0,18 |

mit der Bedingung:
$2 < Fe_2O_3 / V_2O_5 < 6$.

**5.** Kochfläche nach wenigstens einem der vorhergehenden Ansprüche 1 bis 4, **gekennzeichnet durch** eine Zusammensetzung der Glaskeramik, die in Gew.-% auf Oxidbasis enthält:

| | |
|---|---|
| CaO | 0,2 - 1 |
| SrO | 0,1 - 1. |

**6.** Kochfläche nach wenigstens einem der vorhergehenden Ansprüche 1 bis 5, **gekennzeichnet durch** gute Schmelzbarkeit und Entglasungsfestigkeit des kristallisierbaren Ausgangsglases mit einer Verarbeitungstemperatur $V_A$ kleiner als 1320°C, einer oberen Entglasungsgrenze mindestens 30°C unter $V_A$ und mit einer Zusammensetzung der Glaskeramik, in Gew.-% auf Oxidbasis von:

| | |
|---|---|
| $Li_2O$ | 3,2 - 4,0 |
| $Na_2O$ | 0,2 - 1 |
| $K_2O$ | 0,1 - 1 |
| $\Sigma\ Na_2O+K_2O$ | 0,4 - 1,2 |
| MgO | 0,1 - 1,2 |
| CaO | 0,2 - 1 |
| SrO | 0 - 1 |
| BaO | 0 - 3 |
| $\Sigma\ CaO+SrO+BaO$ | 0,2 - 4 |
| ZnO | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |
| $ZrO_2$ | 0,5 - 1,6 |
| $P_2O_5$ | 0 - 1,5 |
| $SnO_2$ | 0,1 - 0,5 |
| $\Sigma\ TiO_2+ZrO_2+SnO_2$ | 4,2 - 6 |
| $V_2O_5$ | 0,01 - 0,05 |
| $Fe_2O_3$ | 0,08 - 0,15 |

mit der Bedingung:
$2 < Fe_2O_3 / V_2O_5 < 6$.

**7.** Kochfläche nach wenigstens einem der vorhergehenden Ansprüche 1 bis 6, **gekennzeichnet durch** einen Gleichgewichts-Sauerstoffpartialdruck $pO_2$ der Glaskeramik bzw. des kristallisierbaren Ausgangsglases von 1 bar bei einer Temperatur größer 1580, bevorzugt größer 1640°C.

**8.** Kochfläche nach Anspruch 7, **dadurch gekennzeichnet, dass** der Gleichgewichts-Sauerstoffpartialdruck durch eine Temperatur der Glasschmelze von größer als 1700°C, bevorzugt größer als 1750°C eingestellt ist.

**9.** Kochfläche nach mindestens einem der Ansprüche 7 oder 8, **gekennzeichnet durch** einen $V_2O_5$-Gehalt von weniger als 0,04, bevorzugt weniger als 0,03 Gew.-%.

**10.** Kochfläche nach mindestens einem der vorhergehenden Ansprüche 1 bis 9, **dadurch gekennzeichnet, dass** durch eine Temperatur der Glasschmelze von größer als 1700°C, bevorzugt größer als 1750°C eine Blasenzahl von weniger als 5 Blasen/kg Glas erreicht wird und dass der $Fe_2O_3$-Gehalt wenigstens 20 Gew% des $SnO_2$-Gehaltes beträgt.

**11.** Kochfläche nach wenigstens einem der vorhergehenden Ansprüche 1 bis 10, **dadurch gekennzeichnet, dass** anstelle oder in Ergänzung zu den üblichen roten Anzeigen eine oder mehrere andersfarbige Anzeigen, wie blaue, grüne, gelbe, orange oder weiße eingesetzt sind.

**12.** Verfahren zur Herstellung einer transparenten, eingefärbten Kochfläche mit verbesserter farbiger Anzeigefähigkeit bestehend aus einer Glaskeramik mit Hochquarz-Mischkristallen als vorherrschender Kristallphase, **dadurch gekennzeichnet, dass** bis auf unvermeidliche Spuren, auf die chemischen Läutermittel Arsenoxid und/oder Antimonoxid verzichtet und die Kochfläche auf Transmissionswerte von größer als 0,1 % im Bereich des sichtbaren Lichtes im gesamten Wellenlängenbereich von größer als 450 nm, eine Lichttransmission im Sichtbaren von 0,8 - 2,5 % und eine Transmission im Infraroten bei 1600 nm von 45 - 85 % eingestellt wird.

13. Verfahren zur Herstellung einer Kochfläche nach Anspruch 12, **dadurch gekennzeichnet, dass** Transmissionswerte von

> 0,15 % bei 450 nm
> 0,15 % bei 500 nm
> 0,25 % bei 550 nm
3 - 9 % bei 630 nm
50 - 80 % bei 1600 nm
und eine Lichttransmission im Sichtbaren von 1,0 - 2,0
% eingestellt werden.

14. Verfahren zur Herstellung einer Kochfläche nach wenigstens einem der vorhergehenden Ansprüche 12 und 13, **dadurch gekennzeichnet, dass** eine Zusammensetzung der Glaskeramik in Gew.-% auf Oxidbasis verwendet wird, die im wesentlichen besteht aus:

| | |
|---|---|
| $Li_2O$ | 3,0 - 4,2 |
| $\Sigma$ $Na_2O+K_2O$ | 0,2 - 1,5 |
| MgO | 0 - 1,5 |
| $\Sigma$ CaO+SrO+BaO | 0 - 4 |
| ZnO | 0 - 2 |
| $B_2O_3$ | 0 - 2 |
| $Al_2O_3$ | 19 - 23 |
| $SiO_2$ | 60 - 69 |
| $TiO_2$ | 2,5 - 4 |
| $ZrO_2$ | 0,5 - 2 |
| $P_2O_5$ | 0 - 3 |
| $SnO_2$ | 0,1 - < 0,6 |
| $\Sigma$ $TiO_2+ZrO_2+SnO_2$ | 3,8 - 6 |
| $V_2O_5$ | 0,01 - 0,06 |
| $Fe_2O_3$ | 0,03 - 0,2 |

wobei die Bedingung: $1 < Fe_2O_3 / V_2O_5 < 8$ eingestellt wird.

15. Verfahren zur Herstellung einer Kochfläche nach wenigstens einem der vorhergehenden Ansprüche 12 bis 14, **gekennzeichnet durch** eine schnelle Keramisierbarkeit des kristallisierbaren Ausgangsglases, wobei eine Zusammensetzung in Gew.-% auf Oxidbasis verwendet wird, die im wesentlichen besteht aus:

| | |
|---|---|
| $Li_2O$ | 3,2 - 4,2 |
| $Na_2O$ | 0,1 - 1 |
| $K_2O$ | 0,1 - 1 |
| $\Sigma$ $Na_2O+K_2O$ | 0,2 - 1,5 |
| MgO | 0 - 1,5 |
| $\Sigma$ CaO+SrO+BaO | 0,1 - 4 |
| ZnO | 0 - 2 |
| $B_2O_3$ | 0 - 1 |
| $Al_2O_3$ | 19 - 23 |
| $SiO_2$ | 60 - 68 |
| $TiO_2$ | 2,8 - 4 |
| $ZrO_2$ | 0,8 - 1,8 |
| $P_2O_5$ | 0 - 1,5 |
| $SnO_2$ | 0,1 - < 0,6 |
| $\Sigma$ $TiO_2+ZrO_2+SnO_2$ | 4,4 - 6 |
| $V_2O_5$ | 0,01 - 0,05 |
| $Fe_2O_3$ | 0,07 - 0,18 |

wobei die Bedingung: $2 < Fe_2O_3 / V_2O_5 < 6$ eingestellt wird.

16. Verfahren zur Herstellung einer Kochfläche mit schneller Keramisierung des kristallisierbaren Ausgangsglases nach Anspruch 15, mit einer Gesamtdauer von weniger als 2 Stunden, bevorzugt weniger als 80 Minuten, **dadurch gekennzeichnet, dass** die Keramisierung mit folgendem Programm vorgenommen wird:

a) Erhöhen der Temperatur des kristallisierbaren Glases auf den Temperaturbereich von etwa 680°C innerhalb von 3 - 30 Minuten;
b) Erhöhen der Temperatur des kristallisierbaren Glases innerhalb des Temperaturbereichs der Keimbildung von 680 bis 800°C über einen Zeitraum von etwa 10 bis 30 Minuten;
c) Erhöhen der Temperatur des Kristallisationskeime enthaltenden Glases innerhalb von 5 bis 30 Minuten Dauer in den Temperaturbereich hoher Kristallwachstumsgeschwindigkeit von 850 bis 950°C;
d) Halten innerhalb des Temperaturbereiches bei der maximalen Temperatur von 850 bis 950°C bis zu 20 Minuten um Kristalle des Typs Hochquarz-Mischkristalle auf den Kristallisationskeimen wachsen zu lassen und danach;
e) rasches Abkühlen der erhaltenen Glaskeramik auf Raumtemperatur.

17. Verfahren zur Herstellung einer Kochfläche nach wenigstens einem der vorhergehenden Ansprüche 12 bis 16, **dadurch gekennzeichnet, dass** eine Zusammensetzung verwendet wird, die in Gew.-% auf Oxidbasis enthält:

| | |
|---|---|
| CaO | 0,2 - 1 |
| SrO | 0,1 - 1. |

18. Verfahren zur Herstellung einer Kochfläche nach mindestens einem der vorhergehenden Ansprüche 11 bis 17, **gekennzeichnet durch** gute Schmelzbarkeit und Entglasungsfestigkeit des kristallisierbaren Ausgangsglases, mit einer Verarbeitungstemperatur $V_A$ kleiner als 1320°C, einer oberen Entglasungsgrenze wenigstens 30° unter $V_A$, wobei eine Zusammensetzung in Gew.-% auf Oxidbasis von

| | |
|---|---|
| $Li_2O$ | 3,2 - 4,0 |
| $Na_2O$ | 0,2 - 1 |
| $K_2O$ | 0,1 - 1 |
| $\Sigma\ Na_2O+K_2O$ | 0,4 - 1,2 |
| MgO | 0,1 - 1,2 |
| CaO | 0,2 - 1 |
| SrO | 0 - 1 |
| BaO | 0 - 3 |
| $\Sigma\ CaO+SrO+BaO$ | 0,2 - 4 |
| ZnO | 0 - 1,8 |
| $B_2O_3$ | 0 - 1 |
| $Al_2O_3$ | 19 - 22 |
| $SiO_2$ | 62 - 67 |
| $TiO_2$ | 2,8 - 4 |
| $ZrO_2$ | 0,5 - 1,6 |
| $P_2O$ | 0 - 1,5 |
| $SnO_2$ | 0,1 - 0,5 |
| $\Sigma\ TiO_2+ZrO_2+SnO_2$ | 4,2 - 6 |
| $V_2O_5$ | 0,01 - 0,05 |
| $Fe_2O_3$ | 0,08 - 0,15 |

mit der Bedingung:
$2 < Fe_2O_3 / V_2O_5 < 6$
verwendet wird.

19. Verfahren zur Herstellung einer Kochfläche nach mindestens einem der vorhergehenden Ansprüche 12 bis 18, **dadurch gekennzeichnet, dass** ein Gleichgewichts-Sauerstoffpartialdruck pO$_2$ der Glaskeramik bzw. des kristallisierbaren Ausgangsglases von 1 bar bei einer Temperatur größer 1580°C, bevorzugt größer 1640°C eingestellt wird.

20. Verfahren zur Herstellung einer Kochfläche nach Anspruch 19, **dadurch gekennzeichnet, dass** der Gleichgewichts-Sauerstoffpartialdruck durch eine Temperatur der Glasschmelze von größer als 1700°C, bevorzugt größer als 1750°C eingestellt wird.

21. Verfahren nach mindestens einem der vorhergehenden Ansprüche 19 oder 20, **dadurch gekennzeichnet, dass** ein V$_2$O$_5$-Gehalt von weniger als 0,04 bevorzugt weniger als 0,03 Gew.-% verwendet wird.

22. Verfahren zur Herstellung einer Kochfläche nach mindestens einem der vorhergehenden Ansprüche 12 bis 21, **dadurch gekennzeichnet, dass** durch eine Temperatur der Glasschmelze von größer als 1700°C, bevorzugt größer als 1750°C eine Blasenzahl von weniger als 5 Blasen/kg Glas erreicht wird und dass der Fe$_2$O$_3$-Gehalt wenigstens 20 Gew% des SnO$_2$-Gehaltes beträgt.

23. Verfahren zur Herstellung einer Kochflächen nach mindestens einem der vorhergehenden Ansprüche 12 bis 22, **dadurch gekennzeichnet, dass** anstelle oder in Ergänzung zu den üblichen roten Anzeigen eine oder mehrere andersfarbige Anzeigen, wie blaue, grüne, gelbe, orange oder weiße eingesetzt werden.

Europäisches Patentamt

European Patent Office

Office européen des brevets

# EUROPÄISCHER RECHERCHENBERICHT

**Nummer der Anmeldung**

EP 19 19 7216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE WPI<br>Week 199925<br>1999<br>Thomson Scientific, London, GB;<br>AN 1999-296403<br>XP002580477,<br>& JP 11 100230 A (NIPPON ELECTRIC GLASS CO) 13. April 1999 (1999-04-13) | 1,2,5,<br>7-13,17,<br>19-23 | INV.<br>C03C10/00<br>C03C3/087<br>C03C3/095<br>C03C3/097<br>C03C8/02<br>C03C8/04 |
| A | * Zusammenfassung *<br><br>& JP 11 100230 A (NIPPON ELECTRIC GLASS CO) 13. April 1999 (1999-04-13)<br>* Zusammenfassung *<br>----- | 3,4,6,<br>14-16,18 | |
| X | DATABASE WPI<br>Week 199925<br>1999<br>Thomson Scientific, London, GB;<br>AN 1999-296402<br>XP002580478,<br>& JP 11 100229 A (NIPPON ELECTRIC GLASS CO) 13. April 1999 (1999-04-13) | 1,2,5,<br>7-13,17,<br>19-23 | |
| A | * Zusammenfassung *<br><br>& JP 11 100229 A (NIPPON ELECTRIC GLASS CO) 13. April 1999 (1999-04-13)<br>* Zusammenfassung *<br>----- | 3,4,6,<br>14-16,18 | RECHERCHIERTE SACHGEBIETE (IPC)<br><br>C03C |
| X | DE 199 39 787 A1 (SCHOTT GLAS [DE])<br>22. Februar 2001 (2001-02-22) | 1,2,5,<br>7-13,17,<br>19-23 | |
| A | * Seite 3, Zeile 31 - Seite 8, Zeile 52 *<br>* Seite 9, Zeilen 25-36; Ansprüche 1-29 *<br>----- | 3,4,6,<br>14-16,18 | |

-/--

Der vorliegende Recherchenbericht wurde für alle Patentansprüche erstellt

| Recherchenort | Abschlußdatum der Recherche | Prüfer |
|---|---|---|
| München | 8. Januar 2020 | Pollio, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 19 19 7216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 465 460 A2 (NIPPON ELECTRIC GLASS CO [JP]) 6. Oktober 2004 (2004-10-06) * Seite 2, Zeilen 6-21 * * Seite 2, Zeile 39 - Seite 3, Zeile 57; Ansprüche 1-5; Beispiele 2, 8 * ----- | 1-23 | |
| A | US 2007/004578 A1 (MONIQUE COMTE MARIE J [FR] COMTE MARIE JACQUELINE MONIQUE [FR]) 4. Januar 2007 (2007-01-04) * Seite 2, Absatz 39 - Seite 5, Absatz 71; Ansprüche 1-17 * ----- | 1-23 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 8. Januar 2020 | Pollio, Marco |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 19 7216

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2020

| Im Recherchenbericht angeführtes Patentdokument | Datum der Veröffentlichung | Mitglied(er) der Patentfamilie | Datum der Veröffentlichung |
|---|---|---|---|
| JP 11100230 A | 13-04-1999 | ------------------------ | |
| JP 11100229 A | 13-04-1999 | ------------------------ | |
| DE 19939787 A1 | 22-02-2001 | KEINE | |
| EP 1465460 A2 | 06-10-2004 | KEINE | |
| US 2007004578 A1 | 04-01-2007 | CN 101213152 A | 02-07-2008 |
| | | EP 1899276 A1 | 19-03-2008 |
| | | ES 2359899 T3 | 27-05-2011 |
| | | FR 2887870 A1 | 05-01-2007 |
| | | JP 5300474 B2 | 25-09-2013 |
| | | JP 2009500282 A | 08-01-2009 |
| | | KR 20080023360 A | 13-03-2008 |
| | | US 2007004578 A1 | 04-01-2007 |
| | | WO 2007003566 A1 | 11-01-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11100229 A
- JP 11100230 A
- US 20070004578 A1
- US 20080026927 A1
- DE 19939787 C2
- EP 1465460 A2

**In der Beschreibung aufgeführte Nicht-Patentliteratur**

- Low Thermal Expansion Glass Ceramics. Springer-Verlag, 1995, 66
- **WOLFRAM HÖLAND ; GEORGE BEALL.** Glass-Ceamic Technology. The American Ceramic Society, 2002
- Low Thermal Expansion Glass Ceramics. Springer-Verlag, 2005, 63